# EUROPÄISCHE PATENTANMELDUNG

(11) **EP 4 806 630 A1**
(43) Veröffentlichungstag der Anmeldung: **16.09.2026**
(21) Anmeldenummer: 26164573.3
(22) Anmeldetag: 13.03.2026
(51) Int. Cl.: B32B 7/12, B32B 3/08, B32B 5/02, B32B 27/06, B32B 27/12

(54) **SANITÄRPANEEL MIT HEIZFUNKTION**

(30) Priorität: 14.03.2025 DE 102025109982
(71) Anmelder: Roth Werke GmbH, 35232 Dautphetal (DE)
(72) Erfinder:
(74) Vertreter: Andrejewski - Honke Patent- und Rechtsanwälte Partnerschaft mbB

(57) **Zusammenfassung**

Ein Paneel (1) zur Anordnung an einer Rauminnenseite, insbesondere zur Anordnung in einer Nasszelle weist eine Platte (2) und eine Heizlage (3) auf. Das Paneel (1) umfasst eine Sicherungslage (4) und einen Kleber (8). Die Heizlage (3) und die Sicherungslage (4) sind einer Rückseite der Platte (2) zugeordnet, wobei die Heizlage (3) und der Kleber (8) zwischen der Platte (2) und der Sicherungslage (4) angeordnet sind. Die Heizlage (3) weist ein Heizelement (5) und ein Substrat (6) auf. Die Heizlage (3) bzw. das Substrat (6) ist/sind flüssigkeitsdurchlässig ausgebildet, sodass vorzugsweise der Kleber (8) von einer Rückseite der Heizlage (3) bzw. des Substrat (6) durch die Heizlage (3) bzw. das Substrat (6) bis zu der Rückseite der Platte (2) - oder in umgekehrter Richtung - hindurchtreten kann bzw. hindurchgetreten ist.

## Beschreibung

Die Erfindung betrifft ein Paneel zur Anordnung an einer Rauminnenseite, insbesondere zur Anordnung in einer Nasszelle, wobei das Paneel eine Platte aufweist, wobei das Paneel eine Heizlage aufweist, wobei das Paneel eine Sicherungslage aufweist, wobei das Paneel einen Kleber aufweist, wobei die Heizlage und die Sicherungslage einer Rückseite der Platte zugeordnet sind, wobei die Heizlage und der Kleber zwischen der Platte und der Sicherungslage angeordnet sind, wobei die Heizlage ein Heizelement und ein Substrat aufweist. Die Erfindung betrifft ferner Verfahren zur Herstellung eines Paneels sowie eine Verwendung des Paneels.

Derartige Paneele sind bereits aus DE 20 2021 000 837 U1 bekannt. Ein solches Paneel weist eine Dibond-Platte auf, auf deren Rückseite mittels beidseitiger Klebefolie eine Heizfolie befestigt ist. Die Heizfolie ist beidseitig laminiert ausgebildet. Die Dibond-Platte (typischerweise eine mehrere Millimeter dicke Kernschicht aus Polyethylen und Schutzschichten aus Aluminium im Sub-Millimeter-Bereich) weist auf Ihrer Vorderseite bzw. dem Rauminneren zugewandten Seite eine Dekorschicht auf.

Nachteilig an der bekannten Lösung ist die aufwendige Verklebung mittels der doppelseitigen Klebefolie. Der Erfindung liegt daher die Aufgabe zugrunde, ein Paneel zu schaffen, welches einfacher herzustellen ist.

Diese Aufgabe wird gelöst durch ein Paneel zur Anordnung an einer Rauminnenseite, insbesondere zur Anordnung in einer Nasszelle, wobei das Paneel eine Platte aufweist, wobei das Paneel eine Heizlage aufweist, wobei das Paneel eine Sicherungslage aufweist, wobei das Paneel einen Kleber aufweist, wobei die Heizlage und die Sicherungslage einer Rückseite der Platte zugeordnet sind, wobei die Heizlage und der Kleber zwischen der Platte und der Sicherungslage angeordnet sind, wobei die Heizlage wenigstens ein Heizelement und ein Substrat aufweist, dadurch gekennzeichnet, dass die Heizlage bzw. das Substrat flüssigkeitsdurchlässig ausgebildet ist/sind, so dass vorzugsweise der Kleber von einer Rückseite der Heizlage bzw. des Substrats durch die Heizlage bzw. das Substrat bis zu der Rückseite der Platte - oder in umgekehrter Richtung - hindurchtreten kann bzw. hindurchgetreten ist.

Der Erfindung liegt die Erkenntnis zugrunde, dass im Stand der Technik bereits die Aufbringung der beidseitigen Klebefolie mit Aufwand verbunden ist. Zunächst ist von der Klebefolie eine erste Deckfolie abzuziehen, um dann die Klebefolie flächig auf der Rückseite der Dibondplatte aufzubringen. Danach ist eine zweite Deckfolie von der beidseitigen Klebefolie zu entfernen, um schließlich die beidseitig laminierte Heizfolie aufbringen zu können. In einem fünften und letzten Schritt wird der so erzeugte Verbund einem Anpressdruck ausgesetzt, um eine gute Verbundwirkung zu erzielen.

Bei der erfindungsgemäßen Lösung hingegen wird die Heizlage vorzugsweise direkt auf die Rückseite der Platte gelegt, wobei es allenfalls einer Vorfixierung (bspw. einzelner Klebepunkte am Rand der Heizlage) bedarf. Danach wird vorzugsweise von einer noch aufzubringenden Materialbahn bevorzugt eine Deckfolie abgezogen, um eine Klebeschicht der Materialbahn freizulegen und auf die Heizlage aufzulegen. Die Materialbahn umfasst vorzugsweise die Klebeschicht und eine Membranschicht und/oder Sicherungsschicht. Der Kleber der Klebeschicht durchdringt bei einem Anpressen der Materialbahn mit einem hohen Anpressdruck das Substrat der Heizlage und verbindet die Sicherungslage Membranschicht bzw. Sicherungsschicht mit dem Substrat und vor allem mit der Rückseite der Platte, wodurch eine - nahezu vollflächige - Verklebung der Heizlage mit der Platte stattfindet.

Im Ergebnis findet lediglich ein vollflächiger Verklebungsschritt statt, so dass der aufwendige und fehlerintolerante zweite vollflächige Verklebungsschritt eingespart wird und sich die Herstellung des Paneels vereinfacht. Gleichzeitig kann das Heizelement, beispielsweise ein Heizdrahtgewebe, vollständig in den Kleber eingebettet und dadurch wasserdicht abgeschirmt werden. Die eingangs genannte Aufgabe wurde gelöst.

Der Begriff "Vorderseite" meint bevorzugt die Seite des Paneels, welche dem Rauminneren zugewandt ist. Vorzugsweise ist die Heizlage einer/der Rückseite der Platte zugeordnet bzw. auf der Rückseite der Platte angeordnet. Vorzugsweise ist eine Vorderseite der Platte von der Heizlage abgewandt. Es ist bevorzugt, dass die Heizlage die Rückseite der Platte wenigstens flächenabschnittsweise bzw. vielfach punktuell (etwa durch Faserbiegungen) berührt. Zweckmäßigerweise sind die durch die Anordnung von der Platte und der Heizlage definierten Begrifflichkeiten wie "Rückseite" und "Vorderseite" übertragbar auf andere Lagen bzw. Schichten des Paneels.

Der Ausdruck "Lage" meint mit Vorteil ein flächiges Element. Das flächige Element kann eine Schicht oder mehrere Schichten aufweisen. Eine Schicht kann massiv und/oder homogen ausgebildet sein. Der Ausdruck "massiv" meint vorzugsweise eine Schicht ohne Hohlräume. Der Begriff "homogen" meint vorzugsweise, dass das Material der Schicht über die gesamte Schicht hinweg die gleiche bzw. im Wesentlichen die gleiche Zusammensetzung aufweist. Beispielsweise ist ein Kunststoffvlies eine homogene, aber nicht massiv ausgebildete Schicht, sofern die Fasern überall die im Wesentlichen gleiche Zusammensetzung aufweisen. Eine Schicht umfasst zweckmäßigerweise zwei Grenzflächen und insbesondere genau zwei Grenzflächen. Im Falle eines Vlieses kann eine Grenzfläche durch eine Vielzahl an Faserkörpern gebildet werden.

Gemäß einer sehr bevorzugten Ausführungsform kontaktiert der Kleber eine Rückseite der Platte und/oder eine Vorderseite der Sicherungslage und/oder das wenigstens eine Heizelement wenigstens flächenabschnittsweise und bevorzugt vollständig. Dies bewirkt, dass ein fester Kleberverbund nicht nur zwischen der Heizlage und der Platte oder der Heizlage und der Sicherungslage, sondern auch zwischen der Sicherungslage und der Platte erzielt wird. Es ist sehr bevorzugt, dass der Kleber wenigstens 20 bzw. 30 bzw. 40 bzw. 50 bzw. 60 bzw. 70 bzw. 80 bzw. 90 bzw. 95 % einer Fläche der Heizlage bzw. der Heizlagen des Paneels bedeckt. Vorzugsweise füllt der Kleber wenigstens 20 bzw. 30 bzw. 40 bzw. 50 bzw. 60 bzw. 70 bzw. 80 bzw. 90 bzw. 95 % des Volumens der Heizlage aus.

Es ist von Vorteil, wenn die Platte eine Kernschicht und/oder eine vorderseitige Schutzschicht und/oder eine rückseitige Schutzschicht und/oder einen Dekordruck aufweist. Die Kernschicht weist vorzugsweise einen Kunststoff und insbesondere ein Polyolefin, weiter vorzugsweise einen Polyethylen und besonders vorzugsweise ein Low-Density-Polyethylen (LDPE) auf. Vorzugsweise beläuft sich ein Gewichtsanteil des Kunststoffs bzw. Polyolefins bzw. Polyethylens bzw. LDPEs an der Kernschicht auf wenigstens 30 bzw. 40 bzw. 50 bzw. 60 bzw. 70 bzw. 80 bzw. 90 %. Es ist von Vorteil, wenn sich eine Schichtdicke der Kernschicht auf wenigstens 0,5 bzw. 1,0 bzw. 1,5 bzw. 2,0 mm beläuft. Mit Vorteil beträgt eine Schichtdicke der Kernschicht höchstens 30 bzw. 20 bzw. 15 bzw. 10 bzw. 8 bzw. 6 bzw. 4 mm. Die Kernschicht ermöglicht eine gute mechanische Stabilität der Platte bzw. des Paneels bei einem relativ geringen Gewicht. Es ist möglich, dass die Platte eine Wabenstruktur, vorzugsweise eine kunststoffhaltige Wabenstruktur, umfasst.

Vorzugsweise umfasst die rückseitige Schutzschicht und/oder die vorderseitige Schutzschicht ein Metall und weiter vorzugsweise Aluminium. Die Schutzschicht bzw. Schutzschichten bewirken einen chemischen Schutz bzw. eine gute Abschirmung der Kernschicht vor Wasser, Tensiden bzw. generell vor Chemikalien sowie Licht. Mit Vorteil beläuft sich ein Gewichtsanteil des Metalls bzw. Aluminiums an der rückseitigen Schutzschicht und/oder an der vorderseitigen Schutzschicht auf mindestens 30 bzw. 40 bzw. 50 bzw. 60 bzw. 70 bzw. 80 bzw. 90 %. Es ist sehr bevorzugt, dass sich eine Schichtdicke der vorderseitigen Schutzschicht und/oder der rückseitigen Schutzschicht auf wenigstens 0,1 bzw. 0,15 bzw. 0,2 mm beläuft. Vorzugsweise beträgt eine Schichtdicke der vorderseitigen Schutzschicht und/oder der rückseitigen Schutzschicht höchstens 2 mm bzw. 1,5 mm bzw. 1,0 mm bzw. 0,5 mm.

Zweckmäßigerweise umfasst die Heizlage mehrere Heizelemente. Mit Vorteil ist das wenigstens eine Heizelement bzw. sind die Heizelemente elektrisch betreibbar. Vorzugsweise ist das wenigstens eine Heizelement ein Widerstandsheizelement bzw. ein Widerstandsheizdraht. Hierdurch ist die Heizlage leicht zu betreiben und komfortabel zu installieren. Außerdem wird hierdurch eine flache Bauweise des Paneels erreicht. Es ist bevorzugt, dass das wenigstens eine Heizelement bzw. die mehreren Heizelemente in die Heizlage eingebettet ist/sind. Es ist möglich, dass die Heizlage eine Carbonfolie mit einem Lochmuster aufweist. Vorzugsweise umfasst das Paneel bzw. die Heizlage wenigstens einen Sensor, insbesondere einen Temperatursensor und/oder einen Feuchtigkeitssensor. Mit Vorteil ist der wenigstens eine Sensor in die Heizlage eingebettet.

Es ist bevorzugt, dass das Panel wenigstens eine Heizfläche und vorzugsweise zwei oder drei oder vier Heizflächen aufweist. Es bevorzugt, dass die wenigstens eine Heizfläche bzw. die mehreren Heizfläche durch eine Heizlage aufgespannt wird/werden. Mit Vorteil umfasst die wenigstens eine Heizfläche bzw. die wenigstens eine Heizlage einen ersten Hauptleiter und einen zweiten Hauptleiter. Mit Vorteil sind zwischen dem ersten Hauptleiter und dem zweiten Hauptleiter eine Mehrzahl an Heizelementen bzw. Heizdrähten bzw. Widerstandsdrähten angeordnet. Es ist möglich, dass die wenigstens zwei bzw. drei bzw. vier Heizflächen bzw. Heizlagen zueinander parallel oder in Reihe geschaltet sind.

Vorzugsweise sind der bzw. jeder Heizfläche bzw. der bzw. jeder Heizlage zwei Anschlussleitungen zugeordnet. Die Anschlussleitungen sind zweckmäßigerweise als Kabel und vorzugsweise als Flachkabel ausgestaltet. Es ist sehr bevorzugt, dass die Anschlussleitungen nicht mehr als 40 bzw. 30 bzw. 20 cm von einem Rand des Paneels entfernt sind. Es ist sehr bevorzugt, dass die wenigstens zwei Heizlagen einander nicht überlappen bzw. ausschließlich nebeneinander angeordnet sind. Es ist bevorzugt, dass wenigstens zwei Heizlagen in Höhenrichtung bzw. Längsrichtung des Paneels einen Abstand zueinander aufweisen, wobei der Abstand vorzugsweise wenigstens 5 bzw. 10 bzw. 15 mm beträgt.

Mit Vorteil ist der Abstand zwischen den wenigstens zwei Heizlagen in Höhenrichtung höchstens 100 bzw. 80 bzw. 60 cm groß. Es ist sehr bevorzugt, dass die Sicherungslage einstückig ausgebildet ist und die wenigstens eine Heizlage bzw. die mehreren Heizlagen wenigstens teilweise und bevorzugt vollständig überdeckt. Der Begriff "einstückig" meint vorzugsweise, dass ein einstückiger Körper lediglich zerstörend bzw. irreversibel in zwei Stücke teilbar ist.

Gemäß einer sehr bevorzugten Ausführungsform umfasst das Substrat Fasern und insbesondere ein Vlies. Dies bewirkt, dass das Substrat bzw. die Heizlage robust und zugleich wasserdurchlässig ist. Vorzugsweise umfasst das Substrat einen Kunststoff. Es ist sehr bevorzugt, dass die Fasern des Substrats den Kunststoff des Substrats aufweisen. Es ist möglich, dass die Fasern des Substrats ein Gewebe bilden. Die Fasern des Substrats weisen vorzugsweise eine durchschnittliche Länge von wenigstens 5 bzw. 10 bzw. 15 cm auf. Das wenigstens eine Heizelement bzw. die Heizelemente sind besonders vorzugsweise in das Substrat bzw. in das Gewebe bzw. in das Vlies eingebettet. Mit Vorteil ist/sind die erste Hauptleitung und/oder die zweite Hauptleitung in das Substrat der Heizlage eingebettet.

Es ist bevorzugt, dass der Kleber Isobuten umfasst. Mit Vorteil weist der Kleber Isopren auf. Vorzugsweise umfasst der Kleber einen Isobuten-Isopren-Kautschuk (Butylkautschuk). Hierdurch wird eine gute Klebewirkung erzielt. Zugleich ist ein derartiger Kleber eine gute Wasserdampfsperre und bietet daher eine gute Isolation für das Heizelement bzw. die Heizelemente. Gemäß einer Ausführungsform umfasst die Sicherungslage eine wasserundurchlässige Membranschicht. Mit Vorteil weist die Membranschicht einen Kunststoff, vorzugsweise ein Polyolefin und weiter bevorzugte ein Polyethylen und besonders bevorzugt ein Low-Density-Polyethylen (LDPE) auf. Hierdurch wird eine gute rückwärtige Abdichtung erzielt, falls beispielsweise eine Faser rückwärtig aus dem Kleber herausragen würde.

Es ist sehr bevorzugt, dass der Kleber eine Vorderseite der Membranschicht wenigstens flächenabschnittsweise und vorzugsweise flächenvollständig benetzt. Es ist bevorzugt, dass die Membranschicht eine Schichtdicke von höchstens 2,0 bzw. 1,5 bzw. 1,0 bzw. 0,8 bzw. 0,6 mm aufweist. Mit Vorteil beläuft sich eine Schichtdicke der Membranschicht auf wenigstens 0,05 bzw. 0,07 bzw. 0,09 mm. Es ist sehr bevorzugt, dass die Membranschicht wenigstens 50 bzw. 60 bzw. 70 bzw. 80 bzw. 90 bzw. 95 bzw. 99 % der Fläche der zugeordneten Heizlage bedeckt.

Es ist bevorzugt, dass die Sicherungslage eine Sicherungsschicht umfasst. Mit Vorteil weist die Sicherungsschicht Fasern und insbesondere ein Vlies aus Fasern auf. Vorzugsweise umfassen die Fasern der Sicherungsschicht einen Kunststoff, vorzugsweise ein Polyolefin und weiter vorzugsweise ein Polypropylen. Die Fasern der Sicherungsschicht weisen vorzugsweise eine durchschnittliche Länge von wenigstens 5 bzw. 10 bzw. 15 cm auf. Die Sicherungsschicht besitzt eine Schichtdicke von vorzugsweise höchstens 3,0 bzw. 2,5 bzw. 2,0 bzw. 1,5 mm. Mit Vorteil beläuft sich eine Schichtdicke der Sicherungsschicht auf wenigstens 0,1 bzw. 0,2 bzw. 0,3 mm. Es ist bevorzugt, dass die Sicherungsschicht wenigstens 30 bzw. 40 bzw. 50 bzw. 60 bzw. 70 bzw. 80 bzw. 90 bzw. 95 bzw. 99 % der Fläche der zugeordneten Heizlage bedeckt. Die Sicherungsschicht ist mit Vorteil auf einer Rückseite der Membranschicht angeordnet. Die Sicherungsschicht bildet bevorzugt eine/die Rückseite der Sicherungslage.

Gemäß einer Ausführungsform umfasst die Sicherungslage vorzugsweise eine Dämmplatte. Die Dämmplatte weist mit Vorteil einen Kunststoff und insbesondere einen geschäumten Kunststoff auf. Es bevorzugt, dass der Kunststoff bzw. geschäumte Kunststoff der Dämmplatte ein Thermoplast und insbesondere ein Polyurethan aufweist. Die Dämmplatte ermöglicht eine gute Wärmeisolation, sodass die Heizleistung schneller in das Rauminnere dringt.

Es ist von Vorteil, wenn das Paneel ein magnetisches Element - vorzugsweise ein ferromagnetisches Blech und/oder einen Permanentmagneten - umfasst. Hierdurch wird ein zerstörungsfreies Anbringen von Befestigungselementen, beispielsweise Seifenhalter oder dergleichen, ermöglicht. Bevorzugt ist das magnetische Element zwischen der Platte und der Sicherungslage angeordnet. Das magnetische Element ist mit Vorteil zwischen der Heizlage und der Sicherungslage angeordnet. Es ist möglich, dass das magnetische Element auf einer Rückseite der Sicherungslage bzw. der Sicherungsschicht angeordnet ist. Es ist bevorzugt, dass eine Fläche des magnetischen Elements höchstens 1/3 bzw. 1/4 bzw. 1/5 bzw. 1/6 bzw. 1/7 bzw. 1/8 bzw. 1/9 bzw. 1/10 der Fläche des Paneels oder der wenigstens einen Heizlage beträgt.

Bevorzugt ist das Paneel so ausgebildet ist, dass - vorzugsweise außerhalb eines oder mehreren vorgegebenen und insbesondere durch Markierungen angezeigten Bereichs bzw. Bereichen - Bohrungen und/oder Durchbrüche und/oder Zuschnitte möglich sind und eine Heizfunktion des Paneels bevorzugt wenigstens teilweise erhalten bleibt. Dies erlaubt eine große Flexibilität bei der Installation. Vorzugsweise umfasst eine Heizlage bzw. Heizfläche eine Mehrzahl an parallel zueinander geschalteten Heizelementen. Vorzugsweise umfasst das Paneel eine - bevorzugt reversible, bevorzugt vorderseitige - Markierung für eine verbotene Zone entsprechend einem Verlauf der Hauptleiter und/oder der Anschlussleiter. Vorzugsweise ist das Paneel ausgebildet, dass Bohrungen und/oder Zuschnitte und/oder Durchbrüche außerhalb der verbotenen Zone nicht zu einem vollständigen Verlust bzw. höchstens zu einem teilweisen Verlust der Heizfunktion einer Heizlage bzw. Heizfläche führen.

Die eingangs genannte Aufgabe wird gelöst durch ein Verfahren zur Herstellung eines erfindungsgemäßen Paneels, wobei ein Anpressdruck auf das Paneel bzw. eine Rückseite der Sicherungslage oder eine Vorderseite der Platte ausgeübt wird, so dass der Kleber durch die Heizlage bzw. das Substrat hindurch dringt und die Rückseite der Platte und/oder die Vorderseite der Sicherungslage wenigstens flächenabschnittsweise benetzt. Dies vereinfacht die Herstellung und bringt ein kompaktes Element hervor. Das kompakte Element bzw. das kompakte Paneel ist so kompakt und robust, dass z.B. Bohrungen - selbst bei Vorhandensein von einem oder mehreren Vliesen - kein Problem darstellen. Es ist sehr bevorzugt, dass der Anpressdruckes mittels eines flächigen Presswerkzeuges auf das Paneel bzw. auf einer Rückseite des Paneels bzw. auf einer Rückseite der Sicherungslage einwirkt.

Es ist sehr bevorzugt, dass eine Pressfläche des Presswerkzeuges wenigstens 50 bzw. 60 bzw. 70 bzw. 80 bzw. 90 bzw. 95 bzw. 99 % der Fläche des Paneels entspricht. Der Anpressdruck beläuft sich mit Vorteil auf wenigstens 40 bzw. 50 bzw. 60 bar. Vorzugsweise beträgt ein Anpressdruck auf der Rückseite des Paneels bzw. der Sicherungslage höchstens 200 bzw. 150 bzw. 120 bar. Es ist sehr bevorzugt, dass die Heizlage auf einer Rückseite der Platte angeordnet wird. Zweckmäßigerweise wird ein Kleber auf einer Rückseite und/oder auf einer Vorderseite der Heizlage angeordnet. Es ist bevorzugt, dass nach Anordnung der Heizlage auf der Rückseite der Platte die Sicherungslage auf einer Rückseite der Heizlage angeordnet wird. Der Anpressdruck bewirkt, dass der Kleber durch die Heizlage hindurch dringt und sowohl eine Rückseite der Platte wenigstens flächenabschnittsweise als auch eine Vorderseite der Sicherungslage wenigstens flächenabschnittsweise benetzt.

Die eingangs genannte Aufgabe wird gelöst durch eine Verwendung eines erfindungsgemäßen Paneels bzw. erfindungsgemäß hergestellten Paneels, zur Anordnung an einer Rauminnenseite, vorzugsweise innerhalb einer Nasszelle, weiter vorzugsweise innerhalb einer Dusche. Dies bewirkt die Bereitstellung einer besonders komfortablen und ästhetisch wirkenden Nasszelle. Es ist sehr bevorzugt, dass das Paneel mittels eines Bauklebers an einer Wand in der Nasszelle angeordnet wird. Mit Vorteil ist der Baukleber bzw. eine Menge des Bauklebers so bemessen, dass Ausbuchtungen durch die Anschlussleitungen kompensiert werden.

Nachfolgend wird die Erfindung anhand von zwei Ausführungsbeispielen und vier Figuren näher erläutert. Es zeigen in schematischer Darstellung
- Fig. 1: eine Duschkabine in perspektivischer Darstellung mit zwei erfindungsgemäßen Paneelen,
- Fig. 2: eine Rückseite eines erfindungsgemäßen Paneels, aber noch vor Aufbringung der Sicherungslage,
- Fig. 3: einen Querschnitt durch ein erfindungsgemäßes Paneel eines ersten Ausführungsbeispiels umfassend eine als Materialbahn ausgebildete Sicherungslage und
- Fig. 4: einen Querschnitt durch ein erfindungsgemäßes Paneel eines zweiten Ausführungsbeispiels, bei welchem die Sicherungslage eine Dämmplatte umfasst.

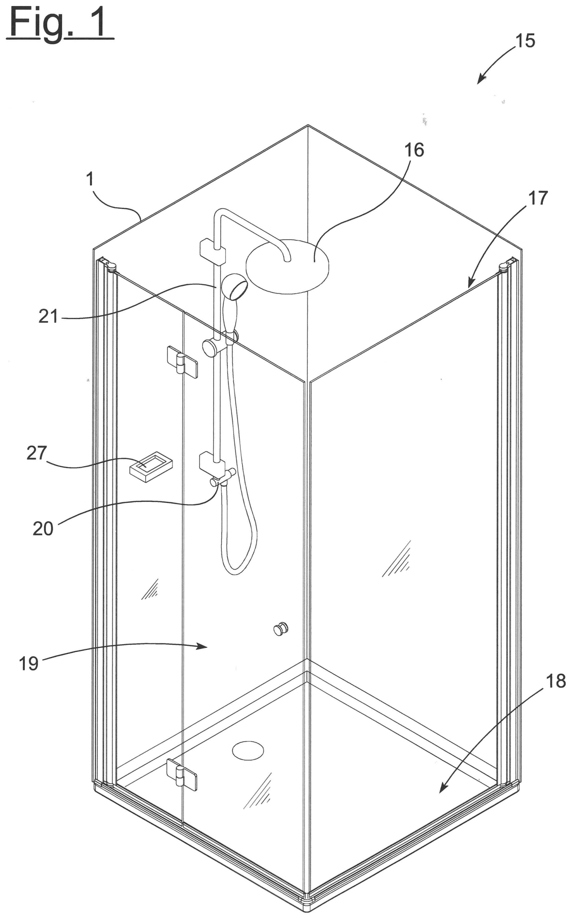

In Fig. 1 ist eine Dusche 15 abgebildet, welche einen Duschkopf 16, eine Duschwand 17, einen Duschboden 18, eine Duschtür 19, eine Duscharmatur 20 und/oder eine Duschstange 21 umfassen kann. Ein erfindungsgemäßes Paneel 1 begrenzt in diesem Ausführungsbeispiel die Dusche 15, wobei an diesem Paneel 1 vorzugsweise die Duscharmatur 20 und/oder die Duschstange 21 angebracht sind. Ein zweites erfindungsgemäßes Paneel kann die Dusche 15 begrenzen und ist in diesem Ausführungsbeispiel gegenüber der Duschtür 19 angeordnet.

An dem ersten Paneel 1 ist vorzugsweise ein Befestigungselement 27 angeordnet, welches beispielsweise in Form eines Seifenhalters ausgebildet ist. Das Befestigungselement 27 ist vorzugsweise magnetisch an dem ersten Paneel 1 befestigt. Die Duscharmatur 20 und/oder ein oberes Ende der Duschstange 21 hingegen ist/sind bevorzugt mittels Bohrungen durch das Paneel 1 mit Wasserleitungen bzw. der Wand verbunden. Das erste Paneel 1 und/oder das zweite Paneel ist/sind vorzugsweise mit Baukleber an der zugehörigen Wand der Nasszelle befestigt. Das zweite Paneel kann im Wesentlichen wie das erste Paneel 1 ausgebildet sein und wird im Folgenden nicht weiter betrachtet.

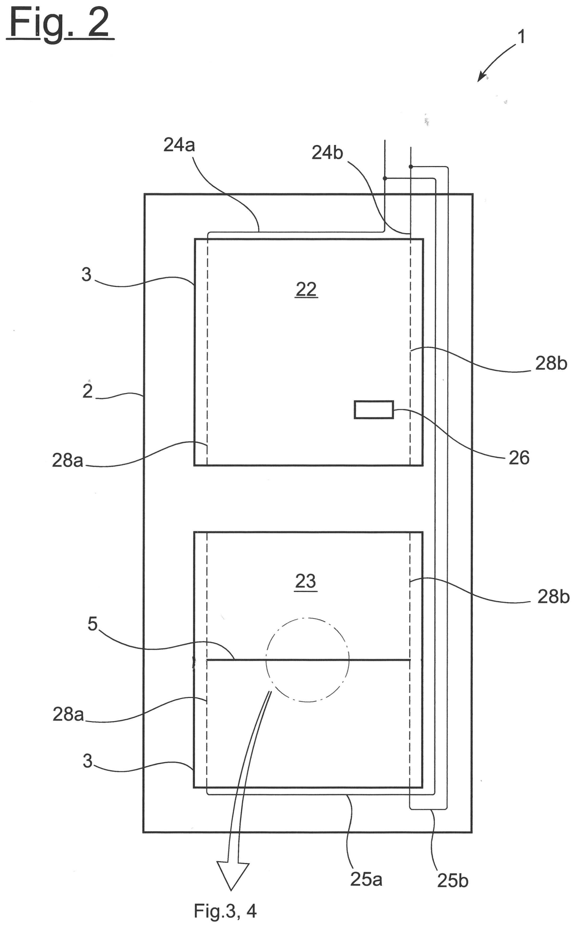

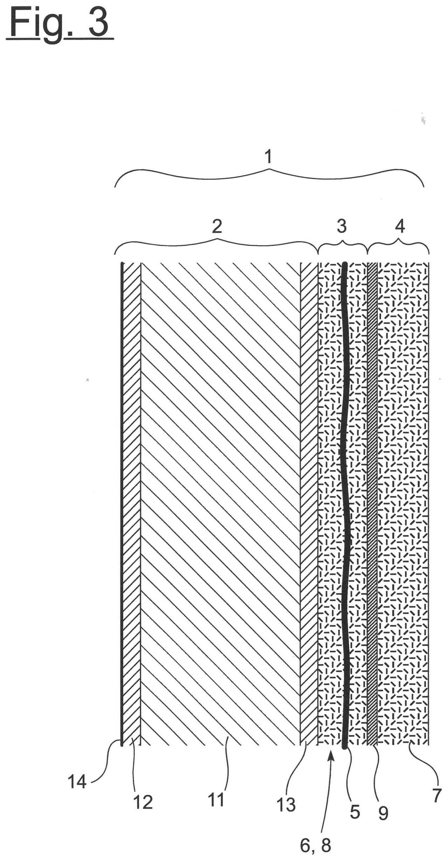

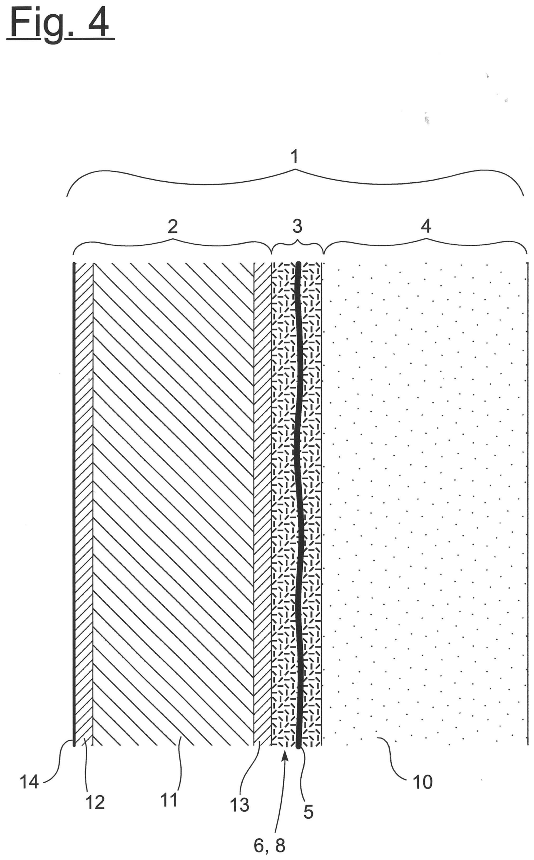

In der Fig. 2 ist das der Duscharmatur 20 zugeordnete erste Paneel 1 (nachfolgend "Paneel 1") dargestellt, wobei das Paneel 1 in Fig. 2 einen Blick auf seine Rückseite freigibt. Die Fig. 2 zeigt dabei einen Zustand des Paneels 1 bevor eine Sicherungslage 4 (s. Figuren 3 und 4) aufgebracht wurde.

Das Paneel 1 gemäß Fig. 2 umfasst eine Platte 2, auf welche in diesem Ausführungsbeispiel wenigstens eine Heizlage 3 und vorzugsweise zwei Heizlagen 3 aufgebracht sind. Die Heizlagen 3 definieren eine erste bzw. obere Heizfläche 22 sowie eine zweite bzw. untere Heizfläche 23. Die/Eine (jede) Heizlage(n) 3 umfasst/en bevorzugt, gestrichelt dargestellt, einen ersten Hauptleiter 28a und einen zweiten Hauptleiter 28b, wobei der erste Hauptleiter 28a und der zweite Hauptleiter 28b sich vorzugsweise parallel und/oder diametral einander gegenüberliegen. Zwischen dem ersten Hauptleiter 28a und dem zweiten Hauptleiter 28b ist vorzugsweise eine Vielzahl an Heizelementen 5 in Form von - beispielsweise - Widerstandsdrähten angeordnet. In Fig. 2 ist der Einfachheit halber lediglich ein einziger Widerstandsdraht bzw. ein einziges Heizelement 5 abgebildet. Es ist bevorzugt, dass die ersten Hauptleiter 28a und zweiten Hauptleiter 28b sich bezüglich Ihrer Längsausdehnung in Höhenrichtung bzw. in Längsrichtung des Paneels 1 erstrecken.

Die ersten Halbleiter 28a und die zweiten Halbleiter 28b werden zweckmäßigerweise über Anschlussleitungen 24a, 24b, 25a, 25b angeschlossen. Die Anschlussleitungen 24a, 24b, 25a, 25b verlaufen vorzugsweise am Rand des Paneels 1, um möglichst weite Flächen des Paneels 1 für Montagearbeiten bereitzustellen. Die Anschlussleitungen 24a, 24b, 25a, 25b werden vorzugsweise an eine Spannungsquelle, insbesondere an eine Niederspannungsquelle, angeschlossen. Die Niederspannungsquelle stellt eine Spannungsdifferenz von vorzugsweise weniger als 70 bzw. 60 bzw. 50 bzw. 40 bzw. 30 bzw. 20 V bereit.

Mit Vorteil sind die Anschlussleitungen 24a, 24b, 25a, 25b so miteinander bzw. mit der Spannungsquelle verschaltet, dass die Heizflächen 22, 23 parallel zueinander geschaltet sind. Dies ermöglicht insbesondere das vollständige Abschalten einer Heizfläche 22, 23 bei gleichzeitigem Betrieb der jeweils anderen Heizfläche 23, 22. Durch das Bereitstellen von zwei Heizflächen 22, 23 kann außerdem ein Mittelbereich in Höhenrichtung zwischen den Heizflächen 22, 23 vorgesehen werden, welcher besonders gut für die Installation einer Duscharmatur 20 geeignet ist.

Das Paneel 1 bzw. die Heizlagen 3 bzw. die Heizflächen 22, 23 ist/sind vorzugsweise so ausgebildet, dass Bohrungen und/oder Durchbrüche und/oder Zuschnitte im Bereich der Heizflächen 22, 23 - aber außerhalb der Hauptleiter 28a, 28b - ohne vollständigen Verlust der Heizfunktion möglich ist/sind. Ein Durchtrennen eines Heizelements 5 bzw. eines Heizdrahts führt nur zur Deaktivierung des Heizelements 5, nicht aber zur Deaktivierung der vollständigen Heizlage 3 bzw. Heizfläche 22, 23. Vorzugsweise umfasst eine Heizlage 3 bzw. Heizfläche 22, 23 eine Mehrzahl an parallel zueinander geschalteten Heizelementen 5.

Beispielsweise eine Bohrung für die Duscharmatur 20 durch eine Heizlage 3 ist daher unproblematisch, solange nicht einer der Hauptleiter 28a, 28b getroffen wird. Vorzugsweise umfasst das Paneel 1 eine - bevorzugt reversible, bevorzugt vorderseitige - Markierung für eine verbotene Zone entsprechend einem Verlauf der Hauptleiter 28a, 28b und/oder der Anschlussleiter 24a, 24b, 25a, 25b. Vorzugsweise ist das Paneel 1 ausgebildet, dass Bohrungen und/oder Zuschnitte und/oder Durchbrüche außerhalb der verbotenen Zone nicht zu einem vollständigen Verlust bzw. höchstens zu einem teilweisen Verlust der Heizfunktion einer Heizlage 3 bzw. Heizfläche 22, 23 führen.

Es ist sehr bevorzugt, dass das Paneel 1 ein magnetisches Element 26 aufweist. Das magnetische Element 26 kann ein ferromagnetisches Material oder ein permanent magnetisches Material aufweisen. Das magnetische Element 26 ist vorzugsweise zwischen der Platte 2 und der Sicherungslage 4 und insbesondere zwischen der Heizlage 3 und der Sicherungslage 4 angeordnet (vgl. Figuren 3 und 4). Zweckmäßigerweise wird das magnetische Element 26 an einer bestimmten Stelle einfach auf das Paneel 1 bzw. die Platte 2 bzw. die Heizlage 3 aufgelegt und mit der Sicherungslage 4 fixiert. Dies ermöglicht eine Anbringung eines Befestigungselements 27 auf der Vorderseite des Paneels 1.

In Fig. 2 ist ein Bereich markiert, welcher in den nachfolgenden Figuren 3 und 4 für die dort gezeigten Querschnitte herangezogen wird. In Fig. 3 ist ein erstes Ausführungsbeispiel eines erfindungsgemäßen Paneels 1 im Querschnitt an einer bestimmten Position auf dem Paneel 1 gemäß Fig. 2 dargestellt. Das Paneel 1 umfasst eine Platte 2, eine Heizlage 3 und eine Sicherungslage 4. Die Platte 2 dieses Ausführungsbeispiels ist eine die Dibondplatte. Vorzugsweise umfasst die Platte 2 eine Kernschicht 11, wobei die Kernschicht 11 vorzugsweise einen Kunststoff und insbesondere ein Polyethylen bzw. LDPE umfasst.

Mit Vorteil weist die Platte 2 eine vorderseitige Schutzschicht 12 auf, wobei die vorderseitige Schutzschicht 12 vorzugsweise Aluminium umfasst. Es ist bevorzugt, dass die Platte 2 eine rückseitige Schutzschicht 13 aufweist, wobei die rückseitige Schutzschicht 13 vorzugsweise Aluminium umfasst. Es ist sehr bevorzugt, dass auf einer Vorderseite der Platte 2 bzw. auf einer Vorderseite der vorderseitigen Schutzschicht 12 ein Dekordruck 14 aufgebracht ist. Der Dekordruck 14 kann kundenindividuell abgestimmt oder auch per Auswahl aus einer Motivsammlung erfolgen. Der Dekordruck 14 kann ein einziges, großes Motiv, beispielsweise eine landschaftliche Szene über die gesamte Vorderseite des Paneels 1 hinweg und/oder repetitive Motive darstellen.

Die Heizlage 3 umfasst vorzugsweise ein Heizelement 5 bzw. eine Vielzahl an Heizelementen 5. Die Heizelemente 5 dieses Ausführungsbeispiels sind mit Vorteil als Widerstandsdrähte ausgebildet. Das Heizelement 5 ist vorzugsweise in der Heizlage 3 eingebettet. Die Heizanlage 3 umfasst ein Substrat 6. Das Substrat 6 ist feuchtigkeitsdurchlässig ausgebildet. Vorzugsweise umfasst das Substrat 6 einen Kunststoff und insbesondere Kunststofffasern. Besonders vorzugsweise ist das Substrat 6 aus einem Vlies aus Kunststofffasern hergestellt. Die Kunststofffasern mögen beispielsweise Polypropylen aufweisen.

In diesem Ausführungsbeispiel kann die Heizlage 3 auf der Rückseite der Platte 2 vorfixiert sein. Die Vorfixierung kann beispielsweise mittels einzelnen, kleinen doppelseitigen Klebestreifen ausgebildet sein. Dann kann vorzugsweise auch das magnetische Element 26 - idealerweise ebenfalls per Vorbefestigung - auf der Heizlage 3 bzw. auf einer Rückseite der Heizlage 3 aufgebracht werden.

In diesem Ausführungsbeispiel umfasst die Sicherungslage 4 vorzugsweise eine Sicherungsschicht 7. Die Sicherungsschicht 7 kann einen Kunststoff und oder Fasern und/oder kunststoffhaltige Fasern aufweisen. Vorzugsweise sind die kunststoffhaltigen Fasern der Sicherungsschicht 7 als Vlies ausgebildet. Mit Vorteil umfasst die Sicherungslage 4 eine Membranschicht 9. Die Membranschicht 9 ist vorzugsweise wasserdicht ausgebildet. Die Membranschicht 9 kann ein Polyethylen und vorzugsweise ein Low-Density-Polyethylen (LDPE) aufweisen. Die Membranschicht 9 ist bevorzugt auf einer Vorderseite der Sicherungsschicht 7 angeordnet.

Das Paneel 1 umfasst vorzugsweise einen Kleber 8. Der Kleber 8 ist vorzugsweise innerhalb des Substrats 6 befindlich. Vorzugsweise benetzt der Kleber 8 wenigstens flächenabschnittsweise eine Rückseite der Platte 2 bzw. der rückseitigen Schutzschicht 13. Es ist bevorzugt, dass der Kleber 8 eine vorderseitige Fläche der Sicherungslage 4 bzw. der Membranschicht 9 wenigstens flächenabschnittsweise und vorzugsweise vollständig benetzt. Vorzugsweise benetzt der Kleber 8 wenigstens abschnittsweise mindestens ein Heizelement 5, vorzugsweise mehrere Heizelemente 5 und besonders vorzugsweise alle Heizelemente 5 einer Heizfläche 22, 23.

In diesem Ausführungsbeispiel ist die Sicherungslage 4 zunächst Bestandteil einer Materialbahn 8, 9, 7. Die Materialbahnen 8, 9, 7 umfasst vorzugsweise den Kleber 8, die Membranschicht 9 und/oder die Sicherungsschicht 7. Der Kleber 8 ist vorzugsweise als Klebeschicht auf einer Vorderseite der Membranschicht 9 bzw. der Sicherungsschicht 7 angeordnet. Der Kleber 8 umfasst mit Vorteil Isobuten und/oder Isopren. Der Kleber 8 ist besonders vorzugsweise ein Isobuten-Isopren-Kautschuk (Butylkautschuk). Es ist von Vorteil, dass die Materialbahn 8, 9, 7 - bevor sie auf die Heizlage 3 aufgelegt wird - von einer Schutzfolie befreit wird. Die Schutzfolie schützt zweckmäßigerweise den Kleber 8 bzw. die aus dem Kleber 8 gebildete Kleberschicht auf einer Vorderseite der Materialbahn 8, 9, 7.

Die Materialbahn 8, 9, 7 wird vorzugsweise auf das in Fig. 2 gezeigte, noch unfertige Paneel 1 aufgelegt. Dann wird mit einem Presswerkzeug ein - vorzugsweise flächiger - Druck auf eine Rückseite der Sicherungslage 4 bzw. der Sicherungsschicht 7 ausgeübt, wodurch die Platte 2, die Heizlage 3 und die Sicherungslage 4 fest miteinander verbunden werden. Der Verbund des Paneels 1 ist aufgrund des Anpressens so stabil, dass trotz der beiden Vliese Bohrungen bzw. Durchbrüche problemlos möglich sind.

Vorzugsweise durch das Pressen der Materialbahn 8, 9, 7 auf eine Rückseite der Platte 2 bzw. der Heizlage 3 dringt der Kleber 8 der Materialbahn durch das Substrat 6 hindurch und benetzt wenigstens flächenabschnittsweise eine Rückseite der Platte 2 bzw. der rückseitigen Schutzschicht 13. Beispielsweise ein Druck von 70-100 bar mag auf die - vorzugsweise gesamte - Fläche der Platte 2 bzw. der Sicherungslage 4 aufgebracht werden, um einen festen, flächigen Verbund des Paneels 1 zu erzielen. Nach dem Anpressen wird vorliegend auch nicht mehr von "Materialbahn" gesprochen, da diese sich mit den anderen Bestandteilen des Paneels zu dem festen Paneelverbund gefügt hat.

In dem Ausführungsbeispiel gemäß Fig. 3 weist die vorderseitige Schutzschicht 12 und/oder die rückseitige Schutzschicht 13 eine Schichtdicke von vorzugsweise 0,3 mm auf. Die Kernschicht 11 mag eine Schichtdicke von 2,4 mm aufweisen. Die Heizlage 3 kann im ungepressten Zustand eine Dicke von 0,5 mm aufweisen. Die Materialbahn 8, 9, 7 mag im ungepressten Zustand eine Stärke von 0,95 mm aufweisen, sodass die Addition dieser beiden Werte eine Summe von 1,45 mm ergibt. Aufgrund der Pressung weisen die Heizlage 3 und die Sicherungslage 4 zusammen eine Stärke von nur noch 0,75 mm auf, sodass diese beiden Lagen 3, 4 um nicht weniger als 0,7 mm zusammengedrückt wurden. Wesentlich für diesen Effekt ist, dass der Kleber 8 der Materialbahn 8, 9, 7 durch das Substrat 6 der Heizanlage 3 hindurchgedrungen ist.

In Fig. 4 ist ein zweites Ausführungsbeispiel eines erfindungsgemäßen Paneels 1 im Querschnitt dargestellt. Dabei sind die Platte 2 und die Heizlage 3 - mit Ausnahme des Klebers 8 - identisch zum ersten Ausführungsbeispiel nach Fig. 3.

Im zweiten Ausführungsbeispiel nach Fig. 4 wurde ein Kleber 8 flächig auf die Rückseite der Platte 2 bzw. der rückseitigen Schutzschicht 13 aufgetragen. In einem zweiten Schritt wird vorzugsweise die Heizlage 3 auf den Kleber 8 aufgelegt. In einem weiteren Schritt wird vorzugsweise die Sicherungslage 4 aufgelegt. Die Sicherungslage 4 ist im Falle des zweiten Ausgangsbeispiels als Dämmplatte 10 ausgebildet. Die Dämmplatte 10 kann einen geschäumten Kunststoff, beispielsweise Polyurethan, aufweisen. Die Dämmplatte 10 kann eine Stärke von beispielsweise 4 mm aufweisen.

Nach dem Auflegen der Dämmplatte 10 wird vorzugsweise die Sicherungslage 4 bzw. die Dämmplatte 10 auf ihrer Rückseite mit einem Anpressdruck beaufschlagt. Der Anpressdruck ist vorzugsweise flächig ausgebildet, sodass das Presswerkzeug einen Pressstempel mit einer Stempelfläche aufweist, die vorzugsweise größer ist als eine Fläche des Paneels 1 bzw. der Platte 2 bzw. der Sicherungslage 4. Der Anpressdruck mag 70-100 bar betragen. Durch den Anpressdruck wird der Kleber 8 vorzugsweise durch die Heizlage 3 bzw. das Substrat 6 hindurchgedrückt, sodass der Kleber 8 wenigstens flächenabschnittsweise eine Vorderseite der Sicherungslage 4 bzw. der Dämmplatte 10 benetzt.

Auf diese Weise wird ein fester Verbund des Paneels 1 erzielt. Es ist alternativ möglich, den Kleber 8 auf einer Vorderseite der Sicherungslage 4 bzw. der Dämmplatte 10 und/oder auf einer Rückseite der Heizlage 3 aufzutragen, um dann eine Materialbahn 7, 9 bzw. Dämmplatte 10 auf eine Rückseite der Heizlage 3 aufzulegen. Bei Anlegen eines Anpressdruckes wird der Kleber 8 vorzugsweise ausgehend von einer Rückseite der Heizlage 3 durch die Heizlage 3 bzw. das Substrat 6 hindurch bis zu einer Rückseite der Platte 2 bzw. der rückseitigen Schutzschicht 13 durchgedrückt. Im Ergebnis benetzt der Kleber 8 vorzugsweise eine/die Rückseite der Platte 2 bzw. der rückseitigen Schutzschicht 13 wenigstens flächenabschnittsweise.

### Bezugszeichenliste

- 1: Paneel
- 2: Platte
- 3: Heizlage
- 4: Sicherungslage
- 5: Heizelement von 3
- 6: Substrat von 3
- 7: Sicherungsschicht von 4
- 8: Kleber
- 9: Membranschicht von 4
- 10: Dämmplatte von 4
- 11: Kernschicht von 2
- 12: Vorderseitige Schutzschicht von 2
- 13: Rückseitige Schutzschicht von 2
- 14: Dekordruck von 2
- 15: Dusche
- 16: Duschkopf
- 17: Duschwand
- 18: Duschboden
- 19: Duschtür
- 20: Duscharmatur
- 21: Duschstange
- 22: Erste Heizfläche
- 23: Zweite Heizfläche
- 24a: Anschlussleitung für 22
- 24b: Anschlussleitung für 22
- 25a: Anschlussleitung für 23
- 25b: Anschlussleitung für 23
- 26: Magnetisches Element
- 27: Befestigungselement
- 28a: Erster Hauptleiter von 22 und 23
- 28b: Zweiter Hauptleiter von 22 und 23

## Patentansprüche

1. Paneel (1) zur Anordnung an einer Rauminnenseite, insbesondere zur Anordnung in einer Nasszelle, wobei das Paneel (1) eine Platte (2) aufweist, wobei das Paneel (1) eine Heizlage (3) aufweist, wobei das Paneel (1) eine Sicherungslage (4) aufweist, wobei das Paneel (1) einen Kleber (8) aufweist,
wobei die Heizlage (3) und die Sicherungslage (4) einer Rückseite der Platte (2) zugeordnet sind, wobei die Heizlage (3) und der Kleber (8) zwischen der Platte (2) und der Sicherungslage (4) angeordnet sind, wobei die Heizlage (3) wenigstens ein Heizelement (5) und ein Substrat (6) aufweist,
**dadurch gekennzeichnet, dass**
die Heizlage (3) bzw. das Substrat (6) flüssigkeitsdurchlässig ausgebildet ist/sind, so dass vorzugsweise der Kleber (8) von einer Rückseite der Heizlage (3) bzw. des Substrats (6) durch die Heizlage (3) bzw. das Substrat (6) bis zu der Rückseite der Platte (2) - oder in umgekehrter Richtung - hindurchtreten kann bzw. hindurchgetreten ist.

2. Paneel (1) nach Anspruch 1, wobei der Kleber (8) eine Rückseite der Platte (2) und/oder eine Vorderseite der Sicherungslage (4) und/oder das wenigstens eine Heizelement (5) wenigstens flächenabschnittsweise kontaktiert.

3. Paneel (1) nach einem der Ansprüche 1 oder 2, wobei die Platte (2) eine Kernschicht (11) und/oder eine vorderseitige Schutzschicht (12) und/oder eine rückseitige Schutzschicht (13) und/oder einen Dekordruck (14) aufweist.

4. Paneel (1) nach einem der Ansprüche 1 bis 3, wobei das wenigstens eine Heizelement (5) elektrisch betreibbar ist, wobei das wenigstens eine Heizelement (5) vorzugsweise ein Widerstandsheizelement ist.

5. Paneel (1) nach einem der Ansprüche 1 bis 4, wobei das Substrat (6) Fasern und insbesondere ein Vlies umfasst, wobei das Substrat (6) vorzugsweise einen Kunststoff aufweist.

6. Paneel (1) nach einem der Ansprüche 1 bis 5, wobei der Kleber (8) Isobuten umfasst, wobei der Kleber (8) vorzugsweise Isopren aufweist, wobei der Kleber (8) vorzugsweise Isobuten-Isopren-Kautschuk umfasst.

7. Paneel (1) nach einem der Ansprüche 1 bis 6, wobei die Sicherungslage (4) eine wasserundurchlässige Membranschicht (9) aufweist, wobei die Membranschicht (9) vorzugsweise einen Kunststoff, bevorzugt ein Polyolefin und weiter bevorzugt ein Polyethylen umfasst.

8. Paneel (1) nach einem der Ansprüche 1 bis 7, wobei das Paneel (1) ein magnetisches Element (26) - vorzugsweise ein ferromagnetisches Blech und/oder einen Permanentmagneten - umfasst.

9. Paneel (1) nach einem der Ansprüche 1 bis 8, wobei das Paneel (1) so ausgebildet ist, dass - vorzugsweise außerhalb eines oder mehreren vorgegebenen und insbesondere durch Markierungen angezeigten Bereichs bzw. Bereichen - Bohrungen und/oder Durchbrüche und/oder Zuschnitte möglich sind und eine Heizfunktion des Paneels (1) bzw. der Heizlage (3) - bevorzugt wenigstens teilweise - erhalten bleibt.

10. Verfahren zur Herstellung eines Paneels nach einem der Ansprüche 1 bis 9, wobei ein Anpressdruck auf das Paneel (1) ausgeübt wird, so dass der Kleber (8) durch die Heizlage (3) bzw. das Substrat (6) hindurch dringt und die Rückseite der Platte (2) und/oder die Vorderseite der Sicherungslage (4) wenigstens flächenabschnittsweise benetzt.

11. Verwendung eines Paneels (1) nach einem der Ansprüche 1 bis 9 bzw. eines nach Anspruch 10 hergestellten Paneels (1), zur Anordnung an einer Rauminnenseite, vorzugsweise innerhalb einer Nasszelle, weiter vorzugsweise innerhalb einer Dusche (15).
